# EUROPÄISCHE PATENTSCHRIFT

(11) **EP 1 158 818 B1**
(45) Veröffentlichungstag und Bekanntmachung des Hinweises auf die Patenterteilung: **12.09.2007**
(21) Anmeldenummer: 01112246.2
(22) Anmeldetag: 18.05.2001
(51) Int. Cl.: H04Q 7/22, G07F 17/32

(54) **Verfahren zum automatischen Verarbeiten von SMS-Nachrichten und Vorrichtung**
Method and device for an automatic SMS handling
Procédé et dispositif pour un traitement automatique de messages courts (SMS)

(30) Priorität: 18.05.2000 DE 10025150; 17.07.2000 DE 10034700
(43) Veröffentlichungstag der Anmeldung: 28.11.2001
(73) Patentinhaber: Bally Wulff Automaten GmbH, 12045 Berlin (DE)
(72) Erfinder: Könnecke, Ernst, 12249 Berlin (DE)
(74) Vertreter: Liesegang, Eva

(56) Entgegenhaltungen:
- EP-A- 0 647 913
- EP-A- 0 924 945
- WO-A-97/31498
- WO-A-98/30297
- WO-A-99/29128
- WO-A-99/41718
- US-A- 5 119 295

## Beschreibung

Der Verbreitungsgrad von Mobilfunktelefonen hat in den letzten Jahren erheblich zugenommen. Dieses ist unter anderem darauf zurückzuführen, daß mit Hilfe der heutigen Mobilfunktelefone Informationen nicht nur im Rahmen des klassischen Telefonierens übertragen werden können, sondern auch mit Hilfe weiterer Übertragungsanwendungen. Hierzu gehört neben dem Informationsaustausch zwischen dem Internet und Mobilfunktelefonen mit Hilfe der WAP-Technik (WAP - "Wireless Application Protocol") auch das Übertragen von SMS-Nachrichten (SMS- "Short Message Service"). Die Übertragung von SMS-Nachrichten stellt eine verbreitete und kostengünstige Möglichkeit zur Übertragung von Nachrichten mit Hilfe von Mobilfunktelefonen dar.

Aus dem Dokument WO 98/30297 ist ein Verfahren zum Durchführen einer Verlosung / eines Spiels bekannt. Mit Hilfe eines Benutzerterminals kann der Benutzer Identifikationsdaten eingeben, die über das Internet an einen Casino-Server übermittelt werden. In dem Casino-Server werden die Identifikationsdaten geprüft. Eine Freigabe einer Verlosung / eines Spiels durch den Casino-Server erfolgt nur dann, wenn bei der Auswertung von Postitionsdaten, die ebenfalls mit Hilfe des Benutzerterminals an den Casino-Server übertragen werden, festgestellt wird, daß das Benutzerterminal sich an einem zugelassenen Ort befindet. Auf diese Weise wird sichergestellt, daß ein Spiel in den Casino-Servern nur mit einem Benutzerterminal eingeleitet und durchgeführt werden kann, welches sich an einen zugelassenen Ort befindet.

In dem Dokument WO 99/29128 wird ein Verfahren zum Fernaufruf einer Prozedur in einer Servereinrichtung beschrieben. Daten zum Auslösen der Prozedur in der Servereinrichtung werden mit Hilfe einer SMS-Nachricht über ein drahtloses Telekornmunikationssystem an die Servereinrichtung übertragen. Gegebenenfalls wird nach dem Ausführen der Prozedur in der Servereinrichtung eine Antwortnachricht erzeugt, die dann mittels SMS-Nachricht versandt wird.

Aufgabe der Erfindung ist es, ein Verfahren zu schaffen, welches die Anwendungsmöglichkeiten des Übertragens von SMS-Nachrichten mit Hilfe von Mobilfunktelefonen erweitert.

Diese Aufgabe wird erfindungsgemäß durch ein Verfahren zur Durchführung einer Verlosung mit einer Verlosungsvorrichtung in Verbindung mit einer automatischen Verarbeitung von SMS-Nachrichten, was wiederum mit Hilfe einer Servereinrichtung durchgeführt wird, die mit einem Mobilfunknetz Informationen austauschen kann, wobei das Verfahren die folgenden Verfahrensschritte aufweist:
- elektronisches Erfassen einer von einer Mobilfunkeinrichtung über das Mobilfunknetz gesendeten SMS-Nachricht mit Hilfe der Servereinrichtung;
- elektronisches Ermitteln eines Inhalts der SMS-Nachricht;
- automatisches Erzeugen einer SMS-Antwortnachricht in Abhängigkeit von dem ermittelten Inhalt der SMS-Nachricht, wobei die SMS-Antwortnachricht einen alphanumerischen Code zur Eingabe an einer Verlosungseinrichtung umfaßt; und
- Übermitteln der SMS-Antwortnachricht an die Mobilfunkeinrichtung und Darstellen des alphanumerischen Codes auf einer Anzeigeinrichtung der Mobilfunknetzwerkeinrichtung;
- elektronisches Erfassen einer der Mobilfunkeinrichtung zugeordneten, elektronischen Identifikation mit Hilfe der Servereinrichtung;
- Speichern einer Information über die SMS-Antwortnachricht in der Servereinrichtung, so daß die Information der Identifikation elektronisch zugeordnet ist; und
   wobei das Verfahren weiterhin die folgenden Verfahrensschritte umfaßt:
   - elektronisches Erfassen einer Benutzereingabe des von der SMS-Antwortnachricht umfaßten, alphanumerischen Codes mit Hilfe von Eingabemitteln einer Verlosungsvorrichtung, die zum elektronischen Austausch von Informationen mit der Servereinrichtung verbindbar ist;
   - elektronisches Überprüfen des von der SMS-Antwortnachricht umfaßten, alphanumerischen Codes mit Hilfe von Prozessormitteln der Verlosungsvorrichtung, wobei beim elektronischen Überprüfen des von der SMS-Antwortnachricht umfaßten, alphanumerischen Codes mit Hilfe einer Modemeinrichtung der Verlosungsvorrichtung Informationen zwischen der Verlosungsvorrichtung und der Servereinrichtung ausgetauscht werden; und
   - automatisches Initiieren einer Verlosung in Abhängigkeit vom Ergebnis des elektronischen Überprüfens des von der SMS-Antwortnachricht umfaßten, alphanumerischen Codes.

Der wesentliche Vorteil, welcher mit der Erfindung erreicht ist, besteht darin, daß es mit Hilfe der automatischen Erfassung der SMS-Nachricht und des automatischen Erzeugens der SMS-Antwortnachricht mit dem alphanumerischen Code möglich ist, die SMS-Technik für Werbeaktionen nutzbar zu machen. Die automatische Erzeugung der SMS-Antwortnachricht in Abhängigkeit vom Inhalt der elektronisch erfaßten SMS-Nachricht macht es möglich, dem Nutzer der Mobilfunkeinrichtung gezielt Informationen zu übermitteln, die beispielsweise ein neues Produkt betreffen. Die SMS-Nachricht kann beispielsweise einen bestimmten Zifferncode umfassen, welcher von der Servereinrichtung elektronisch erkannt wird. In Abhängigkeit von dem Zifferncode wird anschließend die SMS-Antwortnachricht automatisch erzeugt.

Mit Hilfe der SMS-Antwortnachricht kann dem Benutzer der Mobilfunkeinrichtung beispielsweise auch eine Gewinninformation mitgeteilt werden. Diese Gewinninformation kann den Benutzer der Mobilfunkeinrichtung animieren, eine Verkaufsstelle aufzusuchen, in welcher er sich seinen Gewinn abholen kann. Auf diese Weise ist eine Möglichkeit geschaffen, die SMS-Nachrichtenübertragung für Werbekampagnen zu nutzen.

Eine zweckmäßige Weiterbildung der Erfindung sieht vor, daß beim elektronischen Erfassen der der Mobilfunkeinrichtung zugeordneten Identifikation eine Mobilfünknummer der Mobilfunkeinrichtung erfaßt wird, wodurch die Identifikation der Mobilfunkeinrichtung auf eine Weise ermöglicht ist, die technisch mit geringem Aufwand realisierbar ist.

Bei einer bevorzugten Ausgestaltung der Erfindung kann vorgesehen sein, daß in der Servereinrichtung eine Telefaxnachricht automatisch erzeugt und an eine Telefaxeinrichtung automatisch übermittelt wird, wobei die Telefaxnachricht den alphanumerischen Code und die elektronisch erfaßte Identifikation der Mobilfunkeinrichtung umfaßt. Hierdurch kann eine Information über das Interesse des Benutzers der Mobilfunkeinrichtung, welches er mit der Übersendung der SMS-Nachricht zum Ausdruck bringt, vorteilhaft weitergeleitet werden.

Eine hinsichtlich einer benutzerfreundlichen Ausführung des Verfahrens vorteilhafte Ausgestaltung der Erfindung sieht vor, daß die Benutzereingabe mit Hilfe einer Tastatureinrichtung der Verlosungseinrichtung elektronisch erfaßt wird.

Um einen Mißbrauch der SMS-Antwortnachricht bzw. des von der SMS-Antwortnachricht umfaßten alphanumerischen Codes durch mehrere Benutzer zu verhindern, sieht eine bevorzugte Ausführungsform der Erfindung vor, daß das Verlosungsverfahren nur dann automatisch eingeleitet wird, wenn beim elektronischen Überprüfen des alphanumerischen Codes festgestellt wird, daß der alphanumerische Code eine Freigabe ermöglicht und nicht zu einem früheren Zeitpunkt für eine Verlosung freigegeben wurde.

Der Konstruktionsaufwand für die Verlosungseinrichtung ist bei einer zweckmäßigen Fortbildung der Erfindung dadurch minimiert, daß das elektronische Verlosungsverfahren mit Hilfe von Prozessormitteln der Servereinrichtung ausgeführt wird und ein Ergebnis des elektronischen Verlosungsverfahrens von der Servereinrichtung an die Verlosungseinrichtung elektronisch übermittelt wird. Auf diese Weise können in der Verlosungseinrichtung Mittel zum Ausführen des elektronischen Verlosungsverfahrens eingespart werden.

Bei einer vorteilhaften Ausgestaltung der Erfindung kann vorgesehen sein, daß das elektronische Verlosungsverfahren mit Hilfe der Prozessormittel der Verlosungseinrichtung ausgeführt wird. Hierdurch wird der Informationsaustausch zwischen der Verlosungseinrichtung und der Servereinrichtung auf ein Mindestmaß begrenzt, so daß geringere Übertragungskapazitäten benötigt werden.

Eine Verbesserung der Benutzerfreundlichkeit wird bei einer zweckmäßigen Weiterbildung der Erfindung dadurch erreicht, daß das Ergebnis des elektronischen Verlosungsverfahrens mit Hilfe von Ausgabemitteln der Verlosungseinrichtung angezeigt und/oder ausgedruckt wird.

Eine bezüglich erweiterter Anwendungsmöglichkeiten der Verlosungseinrichtung bevorzugte Fortbildung der Erfindung sieht vor, daß während des elektronischen Überprüfens des alphanumerischen Codes mit Hilfe einer Anzeigeeinrichtung der Verlosungseinrichtung weitere Informationen automatisch angezeigt werden.

Die Vorrichtungsansprüche weisen die in Verbindung mit den zugehörigen Verfahrensansprüchen genannten Vorteile entsprechend auf.

Die Vorteile des Verfahrens zum automatischen Verarbeiten von SMS-Nachrichten und der Verlosungseinrichtung kommen insbesondere bei einer Verwendung zur Ausführung einer Werbeaktion zum Tragen.

Die Erfindung wird im Folgenden anhand von Ausführungsbeispielen unter Bezugnahme auf eine Zeichnung näher erläutert. Hierbei zeigen:
- Figur 1: eine schematische Darstellung einer Anordnung zum Ausführen eines Verfahrens zum automatischen Verarbeiten einer SMS-Nachricht in Verbindung mit einer elektronischen Verlosung;
- Figur 2: eine schematische Darstellung einer Anordnung zum Ausführen eines Verfahrens zum automatischen Verarbeiten einer SMS-Nachricht, wobei automatisch eine Telefaxnachricht erzeugt und versendet wird; und
- Figur 3: eine schematische Darstellung einer elektronischen Spieleinrichtung bei deren Nutzung SMS-Nachrichten automatisch verarbeitet werden.

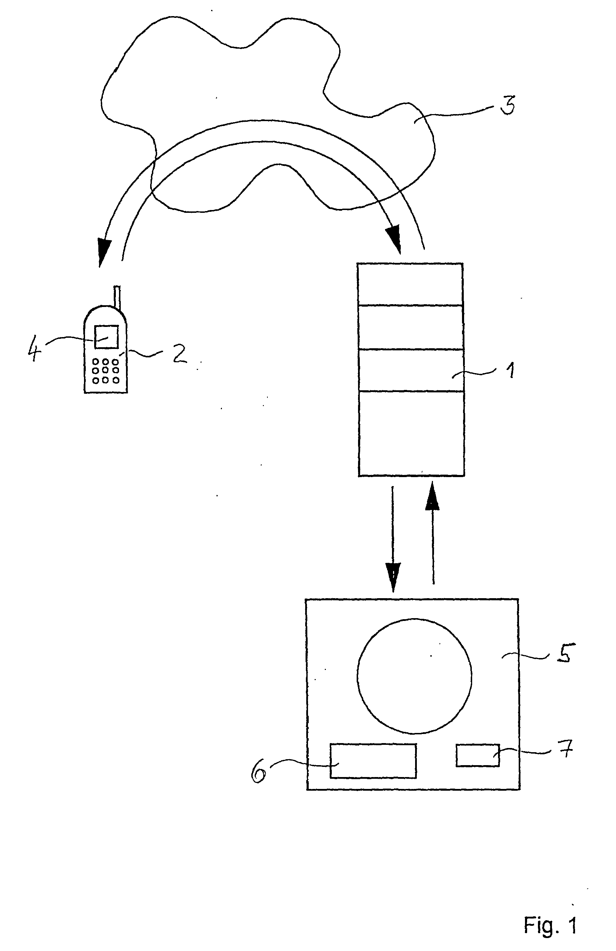

Mit Hilfe des Verfahrens zum automatischen Verarbeiten von SMS-Nachrichten (SMS-"Short Message Service") werden die Anwendungsmöglichkeiten von Mobilfunktelefonen erweitert. Im Folgenden wird das Verfahren unter Bezugnahme auf Figur 1 in Verbindung mit der Durchführung einer Marketingaktion erläutert. Das Verfahren zum automatischen Verarbeiten von SMS-Nachrichten ermöglicht eine neue Art des Marketings.

Ein Unternehmen erteilt einem Anbieter einen Auftrag für eine SMS-Marketingaktion, wobei mit Hilfe der Marketingaktion Kunden für den Kauf von Produkten in Filialen des auftraggebenden Unternehmens aquiriert werden sollen. Das Unternehmen wählt aus traditionellen Werbemitteln eine Kombination der zur SMS-Aktion passenden Werbemittel aus. Werbemittel für die SMS-Aktionen umfassen beispielsweise: Anzeigen in Stadtmagazinen, Flyer-Aktionen in Fußgängerzonen, Plakatwände in Filialnähe, Fernsehwerbung, Internet-Werbebanner auf verwandten Seiten oder Auto-Aufkleber/Bus Bemalung.

Der Anbieter richtet auf einer Servereinrichtung 1 (vgl. Figur 1) eine Mobilfunktelefon-Aktionsnummer beispielsweise die Nummer 0172-545 74 40 für die in Auftrag gegebene SMS-Aktion ein. Die Servereinrichtung 1 kann SMS-Nachrichten vorzugsweise mit Hilfe von Mobilfunk-Modems erhalten und versenden. Auf der Servereinrichtung 1 können verschiedene SMS-Aktionen des gleichen Unternehmens oder von unterschiedlichen Unternehmen parallel laufen. Jede Aktion ist durch eine jeweilige Mobilfunktelefon-Aktionsnummer, die vom Teilnehmer per SMS-Nachricht an die Servereinrichtung 1 gesendet wird, gekennzeichnet.

Nach Aktionsstart kommt eine Benutzer eines Mobilfunktelefons 2 (vgl. Figur 1) beispielsweise zu einer Plakatwand in Filialnähe des Unternehmens, welches den Auftrag zu der SMS-Aktion vergeben hat, und liest auf der Plakatwand den folgenden Text: SMS-Aktion; "JEDE SMS-Nachricht GEWINNT; Rufe 0172-5457440 an, sende den SMS-Text "7777" und GEWINNE DM 5 - 5000,-.

Der Benutzer des Mobilfunktelefons 2 sendet über ein Mobilfunknetz 3 eine SMS-Nachricht, welche den SMS-Text "7777" umfaßt, an die Servereinrichtung 1, wobei hierzu die Mobilfunktelefon-Aktionsnummer, die bei dem beschriebenen Beispiel 0172-545 74 40 lautet, angewählt wird. Die Servereinrichtung 1 empfängt die SMS-Nachricht mit Hilfe eines Mobilfunkmodems (nicht dargestellt). Hierbei kann für eine Identifizierung des Benutzers die Mobilfunktelefon-Nummer des Mobilfunktelefons 2 elektronisch erfaßt werden.

Die Servereinrichtung 1 wertet den Text der empfangenen SMS-Nachricht elektronisch aus und ordnet die SMS-Nachricht der SMS-Aktion elektronisch zu, für welche vom Anbieter die Mobilfunktelefon-Aktionsnummer 0172-545 74 40 vorher eingerichtet wurde. Die Servereinrichtung 1 erzeugt automatisch eine SMS-Antwortnachricht. Die SMS-Antwortnachricht, welche eine Information über eine Gewinnummer umfaßt, wird anschließend von der Servereinrichtung 1 an das Mobilfunktelefon 2 übertragen und über ein Display 4 des Mobilfunktelefons 2 ausgegeben. Die SMS-Antwortnachricht kann beispielsweise den folgenden Text umfassen: "Sie haben DM 5,- oder mehr gewonnen!; Kommen Sie zur unserer Filiale in der Bahnhofstr. 8; Ihre Gewinnummer lautet: 123456". Die Gewinnummer kann als ein beliebiger alphanumerischer Code ausgebildet sein.

In einer Speichereinrichtung (nicht dargestellt) der Servereinrichtung 1 wird eine elektronische Information gespeichert, die dem Benutzer des Mobilfunktelefons 2 elektronisch zugeordnet wird, vorzugsweise mittels der automatisch erfaßten Mobilfunktelefon-Nummer, und Informationen über die SMS-Antwortnachricht enthält, insbesondere hinsichtlich der von der SMS-Antwortnachricht umfaßten Gewinnummer.

Nach dem Erhalt der SMS-Antwortnachricht geht der Benutzer des Mobilfunktelefons 2 zu der in der SMS-Anwortnachricht genannten Filiale des auftraggebenden Unternehmens, um sich seinen Gewinn abzuholen. In der Filiale ist eine Verlosungseinrichtung 5 angeordnet. Der Benutzer gibt über eine Tastatur 6 der Verlosungseinrichtung 5 die Gewinnummer "123456" ein. Die Verlosungseinrichtung 5 überprüft die Gewinnummer mittels eines Anrufs bei der Servereinrichtung 1. Zur Überprüfung der Gewinnummer "123456" wird in der Verlosungseinrichtung 5 eine Anfrage an die Servereinrichtung 1 elektronisch erzeugt und automatisch an die Servereinrichtung 1 übermittelt. Die Servereinrichtung 1 wertet die Anfrage elektronisch aus und überprüft automatisch, ob die dem Benutzer des Mobilfunktlefons 2 zugeordnete Gewinnummer "123456" noch an einer Verlosung mittels der Verlosungseinrichtung 5 in der Filiale teilnehmen darf oder ob die Gewinnummer "123456" bereits zu einem früheren Zeitpunkt zur Freigabe einer elektronischen Verlosung angefordert wurde. Wenn letzteres der Fall ist, erzeugt die Servereinrichtung 1 eine elektronische Information, welche Daten umfaßt, die nach Übermittlung an die Verlosungseinrichtung 5 von dieser elektronisch so auswertbar sind, daß eine Verlosung mit der Verlosungseinrichtung 5 automatisch nicht zugelassen wird. Hierbei kann vorgesehen sein, daß der Benutzer mittels einer Anzeigenausgabe an der Verlosungseinrichtung 5 über die nicht zugelassene Verlosung informiert wird. Der zur Überprüfung notwendige Datenaustausch zwischen der Verlosungseinrichtung 5 und der Servereinrichtung 1 wird vorzugsweise mit Hilfe eines Modems (nicht dargestellt) ausgeführt, beispielsweise ein ISDN-Modem, ein analoges Modem oder ein Funkmodem.

Wird die Verlosung mittels einer elektronischen Nachricht von der Servereinrichtung 1 an die Verlosungseinrichtung 5 freigegeben, so wird die elektronische Verlosung ausgeführt. Mit Hilfe einer Ausgabeeinrichtung 7 der Verlosungseinrichtung 5, vorzugsweise einem Drucker, erhält der Benutzer einen Ausdruck, auf welchem ein automatisch ermittelter Gewinn notiert ist und mit dem der Benutzer an der Kasse den Gewinn abholen kann.

Bei erneuten Übersenden einer SMS-Nachricht, die den SMS-Text "7777" umfaßt, mit Hilfe des Mobilfunktelefons 2 erkennt die Servereinrichtung 1, daß unter der Mobilfunktelefon-Nummer bereits eine Gewinnummer vergeben wurde. Der Teilnehmer verliert von nun an.

Geht der Benutzer mit der Gewinnummer "123456" nach der beschriebenen Verlosung zu einer weiteren Filiale des auftraggebenden Unternehmens und gibt diese Gewinnummer in eine weitere Verlosungseinrichtung (nicht dargestellt) ein, so erhält die weitere Verlosungseinrichtung von der Servereinrichtung 1 die von der weiteren Verlosungseinrichtung elektronisch auswertbare Information "Teilnehmer hat bereits gewonnen". Eine Verlosung mittels der weiteren Verlosungseinrichtung wird dann automatisch verhindert.

Während der Überprüfung der Gewinnummer können an der Verlosungseinrichtung 5 über eine visuelle und/oder eine akustische Ausgabeeinrichtung ein Werbetext und/oder ein Animationston ausgegeben werden.

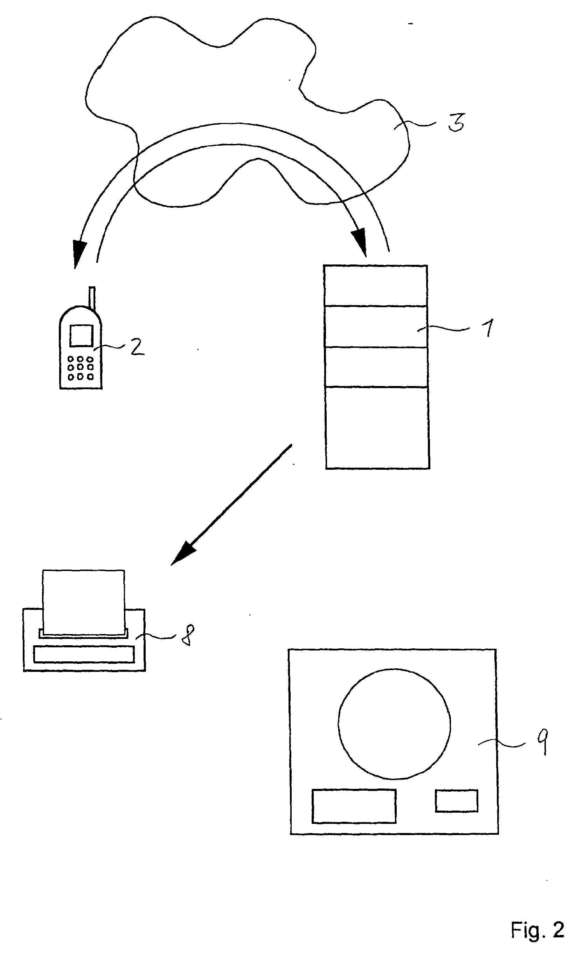

Im Folgenden wird eine Vereinfachung des beschriebenen Verfahrens unter Bezugnahme auf Figur 2 näher erläutert.

Die Servereinrichtung 1 versendet nach Empfang und der anschließenden elektronischen Analyse der SMS-Nachricht des Benutzers des Mobilfunktelefons 2 mit dem SMS-Text "7777" nicht nur automatisch die SMS-Antwortnachricht mit der Gewinnummer "123456" sondern zusätzlich automatisch eine Telefaxnachricht an eine Telefaxeinrichtung 8 in der Filiale, welche in der SMS-Antwortnachricht benannt wurde. In der elektronisch erzeugten Telefaxnachricht wird der Filiale mitgeteilt, daß die übermittelte Gewinnummer "123456" gewonnen hat. Des weiteren enthält die Telefaxnachricht eine Information über die mit Hilfe der Servereinrichtung 1 automatisch ausgeführten Zuordnung zwischen der Gewinnummer "123456" und der Mobilfunktelefon-Nummer des Mobilfunktelefons 2.

Kommt der Benutzer zu der Filiale, an welche die Telefaxnachricht von der Servereinrichtung 1 automatisch übermittelt wurde, zeigt er seine Gewinnummer "123456" auf dem Mobilfunktelefon 2 vor. Entspricht die gezeigte Gewinnummer einer der mit Hilfe des Faxes übermittelten Gewinnummern, erhält der Benutzer eine Karte (nicht dargestellt), mit der er eine Verlosung an der Verlosungseinrichtung 9 in der Filiale auslösen kann. Der Benutzer steckt die Karte in die Verlosungseinrichtung 9, und die Verlosung wird gestartet. Der Verlosungsgewinn wird angezeigt und in Form von Token und/oder Bargeld ausgezahlt. An der Kasse werden die Token dann gegebenenfalls in Sachpreise eingetauscht.

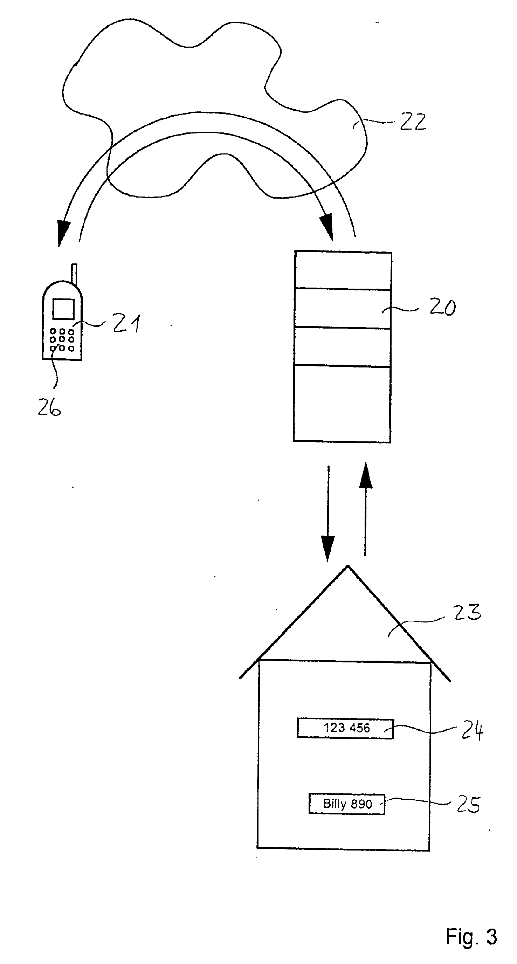

Im Folgenden wird unter Bezugnahme auf Figur 3 eine Vorrichtung beschreiben, die das Ausführen eines elektronischen Spiels mit Hilfe eines SMS-Datenaustausch ermöglicht.

Die Vorrichtung umfaßt eine Servereinrichtung 20 zum gleichzeitigen Empfangen einer Vielzahl von SMS-Nachrichten und zur Übermittlung von Spiel- und Teilnahmebedingungen an ein Mobilfunktelefon 21 über ein Mobilfunknetz 22. An einem Gebäude 23 sind Anzeigeeinrichtungen 24, 25 angeordnet, die zum elektronischen Datenaustausch mit der Servereinrichtung 20 verbindbar sind. Des weiteren ist eine Bildschirmeinrichtung (nicht dargestellt) mit der Servereinrichtung 20 verbunden, vorzugsweise um auszuzahlende Gewinne im Bereich einer Kasse anzuzeigen. Auf der Servereinrichtung 20 ist eine zum automatischen Ausführen einer elektronischen Verlosung bzw. eines elektronischen Lottos notwendige Software installiert.

Die Teilnahme an einem Spiel wird mit Hilfe des Mobilfunktelefons 21 (vgl. Figur 3) eingeleitet. Der Benutzer des Mobilfunktelefons 21 wählt eine mit Hilfe der Anzeigeeinrichtungen 24, 25 angezeigte Telefonnummer und sendet eine SMS-Nachricht. Er gibt hierbei zusätzlich einen Codenamen ein. Die letzten vier Ziffern der Mobilfunktelefon-Nummer des Mobilfunktelefons 21 werden dem Codenamen zur Sicherheit der Identifizierung automatisch beigefügt (Sicherheitsnummer).

Anschließend kann ein Spiel gestartet werden, welches auf der Servereinrichtung 20 ausgeführt wird. Nach Beginn des Spieles kann der Benutzer das Spiel mit Hilfe eines Tastenfelds 26 des Mobilfunktelefons 21 aktiv beeinflussen, beispielsweise Starten, Stoppen oder ein Risikospiel beginnen. Bei jeder Teilnahme an einem Spiel wird von einem Mobilfunktelefon-Konto des teilnehmenden Benutzers des Mobilfunktelefons 21 ein öffentlich sichtbarer oder von dem Benutzer selbst festgelegter Spieleinsatz abgebucht. Das Konto, von welchem abzubuchen ist, wird hierbei anhand der Mobilfunktelefon-Nummer automatisch identifiziert. Nach Abschluß eines Spieldurchganges stehen Gewinn oder Nichtgewinn des jeweiligen Benutzers fest. Auf den Anzeigeeinrichtungen 24, 25 werden der/die Gewinner des Spiels mit Codenamen und Sicherheitsnummer angezeigt. Der Gewinn kann nun an der Kasse abgeholt werden.

Von den Teilnehmern kann vor oder nach dem Spiel mit Hilfe einer SMS-Nachricht ein Einverständnis dahingehend automatisch abgefragt und ausgewertet werden, auf das benutzte Mobilfunktelefon 21 weitere Informationen gesendet werden sollen. Diese Informationen haben den Zweck, auf weitere Attraktionen und Aktionen des Betreibers aufmerksam zu machen

Die in der vorstehenden Beschreibung und der Zeichnung offenbarten Merkmale der Erfindung können sowohl einzeln als auch in beliebiger Kombination für die Verwirklichung der Erfindung in ihren verschiedenen Ausführungsformen von Bedeutung sein.

## Patentansprüche

1. Verfahren zur Durchführung einer Verlosung mit einer Verlosungsvorrichtung in Verbindung mit einer automatischen Verarbeitung von SMS-Nachrichten, was wiederum mit Hilfe einer Servereinrichtung (1) durchgeführt wird, die mit einem Mobilfunknetz (3) Informationen austauschen kann, wobei das Verfahren die folgenden Verfahrensschritte aufweist:
- elektronisches Erfassen einer von einer Mobilfunkeinrichtung (2) über das Mobilfunknetz (3) gesendeten SMS-Nachricht mit Hilfe der Servereinrichtung (1);
- elektronisches Ermitteln eines Inhalts der SMS-Nachricht;
- automatisches Erzeugen einer SMS-Antwortnachricht in Abhängigkeit von dem ermittelten Inhalt der SMS-Nachricht, wobei die SMS-Antwortnachricht einen alphanumerischen Code zur Eingabe an einer Verlosungseinrichtung umfaßt; und
- Übermitteln der SMS-Antwortnachricht an die Mobilfunkeinrichtung (2) und Darstellen des alphanumerischen Codes auf einer Anzeigeinrichtung (4) der Mobilfunkeinrichtung (2);
- elektronisches Erfassen einer der Mobilfunkeinrichtung (2) zugeordneten, elektronischen Identifikation mit Hilfe der Servereinrichtung (1)
- Speichern einer Information über die SMS-Antwortnachricht in der Servereinrichtung (1), so daß die Information der Identifikation elektronisch zugeordnet ist; und
wobei das Verfahren weiterhin die folgenden Verfahrensschritte umfaßt:
- elektronisches Erfassen einer Benutzereingabe des von der SMS-Antwortnachricht umfaßten, alphanumerischen Codes mit Hilfe von Eingabemitteln (6) einer Verlosungsvorrichtung (5), die zum elektronischen Austausch von Informationen mit der Servereinrichtung (1) verbindbar ist;
- elektronisches Überprüfen des von der SMS-Antwortnachricht umfaßten, alphanumerischen Codes mit Hilfe von Prozessormitteln der Verlosungsvorrichtung (5), wobei beim elektronischen Überprüfen des von der SMS-Antwortnachricht umfaßten, alphanumerischen Codes mit Hilfe einer Modemeinrichtung der Verlosungsvorrichtung (5) Informationen zwischen der Verlosungsvorrichtung (5) und der Servereinrichtung (1) ausgetauscht werden; und
- automatisches Initiieren einer Verlosung in Abhängigkeit vom Ergebnis des elektronischen Überprüfens des von der SMS-Antwortnachricht umfaßten, alphanumerischen Codes.

2. Verfahren nach Anspruch 1, **dadurch gekennzeichnet, daß** beim elektronischen Erfassen der Identifikation, welche der Mobilfunkeinrichtung (2) zugeordnet ist, eine Mobilfunknummer der Mobilfunkeinrichtung (2) erfaßt wird.

3. Verfahren nach Anspruch 1 oder 2, **dadurch gekennzeichnet, daß** in der Servereinrichtung (1) eine Telefaxnachricht automatisch erzeugt und an eine Telefaxeinrichtung (8) automatisch übermittelt wird, wobei die Telefaxnachricht den von der SMS-Antwortnachricht umfaßten, alphanumerischen Code und die elektronisch erfaßte Identifikation der Mobilfunkeinrichtung (2) umfaßt.

4. Verfahren nach Anspruch 1, **dadurch gekennzeichnet, daß** die Benutzereingabe mit Hilfe einer Tastatureinrichtung (6) der Verlosungseinrichtung (5) elektronisch erfaßt wird.

5. Verfahren nach einem der vorangehenden Ansprüche, **dadurch gekennzeichnet, daß** die Verlosung nur dann automatisch eingeleitet wird, wenn beim elektronischen Überprüfen des von der SMS-Antwortnachricht umfaßten, alphanumerischen Codes festgestellt wird, daß der von der SMS-Antwortnachricht umfaßte, alphanumerische Code eine Freigabe ermöglicht und nicht zu einem vorherigen Zeitpunkt für eine Verlosung freigegeben wurde.

6. Verfahren nach einem der vorangehenden Ansprüche, **dadurch gekennzeichnet, daß** die Verlosung mit Hilfe von Prozessormitteln der Servereinrichtung (1) ausgeführt wird und ein Ergebnis der Verlosung von der Servereinrichtung (1) an die Verlosungseinrichtung (5) elektronisch übermittelt wird.

7. Verfahren nach einem der Ansprüche 1 bis 5, **dadurch gekennzeichnet, daß** das elektronische Verlosungsverfahren mit Hilfe der Prozessormittel der Verlosungseinrichtung (5) ausgeführt wird.

8. Verfahren nach einem der vorangehenden Ansprüche, **dadurch gekennzeichnet, daß** das Ergebnis der Verlosung mit Hilfe von Ausgabemitteln (7) der Verlosungseinrichtung (5) angezeigt und /oder ausgedruckt wird.

9. Verfahren nach einem der vorangehenden Ansprüche, **dadurch gekennzeichnet, daß** während des elektronischen Überprüfens des von der SMS-Antwortnachricht umfaßten, alphanumerischen Codes mit Hilfe einer Anzeigeeinrichtung der Verlosungseinrichtung (5) weitere Informationen automatisch angezeigt werden.

10. Verlosungsvorrichtung (5) zur Verwendung bei einem Verlosungsverfahren nach einem der Ansprüche 1 bis 9, wobei die Verlosungsvorrichtung (5) folgende Merkmale aufweist:
- Eingabemittel (6) zum elektronischen Erfassen einer Benutzereingabe, die einen von einer Servereinrichtung (1) übermittelten, alphanumerischen Code umfaßt;
- Prozessormittel zum Ausführen eines Informationsaustauschs mit der Servereinrichtung (1) zur Überprüfung der elektronisch erfaßten Benutzereingabe; und
- eine mit den Prozessormitteln verbundene Modemeinrichtung zum Senden /Empfangen von Daten im Rahmen des Informationsaustauschs mit der Servereinrichtung (1).

11. Vorrichtung (5) nach Anspruch 10, **dadurch gekennzeichnet, daß** die Modemeinrichtung ein ISDN-Modem oder ein analoges Modem oder ein Mobilfunkmodem ist.

12. Vorrichtung (5) nach Anspruch 10 oder 11, **gekennzeichnet durch** Mittel zum automatischen Ausführen der Verlosung.

13. Vorrichtung (5) nach Anspruch 13, **gekennzeichnet durch** Ausgabemittel (7) zum grafischen Ausgeben und / oder Ausdrucken eines Ergebnisses der Verlosung.

14. Verwendung eines Verfahrens nach einem der Ansprüche 1 bis 9 und /oder einer Vorrichtung (5) nach einem der Ansprüche 10 bis 13 zum Ausführen einer Werbeaktion.

## Claims

1. A method for carrying out a draw with a draw apparatus in conjunction with automatic processing of SMS messages, which in turn is carried out with the aid of a server apparatus (1) which can exchange information with a mobile telephone network (3), wherein the method includes the following method steps:
- electronically detecting an SMS message transmitted by a mobile telephone apparatus (2) via the mobile telephone network (3) with the aid of the server apparatus (1);
- electronically determining a content of the SMS message;
- automatically creating an SMS response message depending on the determined content of the SMS message, wherein the SMS response message comprises an alphanumeric code for input into a draw apparatus; and
- transmitting the SMS response message to the mobile telephone apparatus (2) and representation of the alphanumeric code on a display apparatus (4) of the mobile telephone apparatus (2);
- electronically detecting an electronic identification allocated to the mobile telephone apparatus (2) with the aid of the server apparatus (1);
- storing an item of information concerning the SMS response message in the server apparatus (1), so that the information is electronically allocated to the identification; and wherein the method also comprises the following method steps:
- electronically detecting user input of the alphanumeric code included in the SMS response message with the aid of input means (6) of a draw apparatus (5), which can be connected to the server apparatus (1) for electronic exchange of information;
- electronically checking the alphanumeric code included in the SMS response message with the aid of processor means of the draw apparatus (5), wherein on electronically checking the alphanumeric code included in the SMS response message, with the aid of a modem apparatus of the draw apparatus (5), information is exchanged between the draw apparatus (5) and the server apparatus (1); and
- automatically initiating a draw depending on the result of the electronic checking of the alphanumeric code included in the SMS response message.

2. The method according to claim 1, **characterized in that**, on electronically detecting the identification that is allocated to the mobile telephone apparatus (2), a mobile telephone number of the mobile telephone apparatus (2) is detected.

3. The method according to claim 1 or 2, **characterized in that** a facsimile message is automatically generated in the server apparatus (1) and is automatically transmitted to a facsimile apparatus (8), wherein the facsimile message includes the alphanumeric code included in the SMS response message and the electronically detected identification of the mobile telephone apparatus (2).

4. The method according to claim 1, **characterized in that** the user input is electronically detected with the aid of a keyboard apparatus (6) of the draw apparatus (5).

5. The method according to any one of the preceding claims, **characterized in that** the draw is only automatically initiated if, on electronically checking the alphanumeric code included in the SMS response message, it is established that the alphanumeric code included in the SMS response message enables clearance and no clearance for a draw was given at an earlier time.

6. The method according to any one of the preceding claims, **characterized in that** the draw is carried out with the aid of processor means of the server apparatus (1) and a result of the draw is transmitted electronically from the server apparatus (1) to the draw apparatus (5).

7. The method according to any one of the claims 1 to 5, **characterized in that** the electronic draw method is carried out with the aid of the processor means of the draw apparatus (5).

8. The method according to any one of the preceding claims, **characterized in that** the result of the draw is displayed and/or printed out with the aid of output means (7) of the draw apparatus (5).

9. The method according to any one of the preceding claims, **characterized in that** during the electronic checking of the alphanumeric code included in the SMS response message with the aid of a display apparatus of the draw apparatus (5), further information is automatically displayed.

10. A draw apparatus (5) for use with a draw method according to any one of the claims 1 to 9, wherein the draw apparatus (5) has the following features:
- input means (6) for electronically detecting a user input which includes an alphanumeric code transmitted by a server apparatus (1);
- processor means for carrying out an information exchange with the server apparatus (1) for checking the electronically detected user input; and
- a modem apparatus linked to the processor means for transmitting/receiving data within the context of the information exchange with the server apparatus (1).

11. The apparatus (5) according to claim 10, **characterized in that** the modem apparatus is an ISDN modem or an analogue modem or a mobile telephone modem.

12. The apparatus (5) according to claim 10 or 11, **characterised by** means for automatically carrying out the draw.

13. The apparatus (5) according to claim 13, **characterised by** output means (7) for graphic output and/or printout of a result of the draw.

14. Use of a method according to any one of the claims 1 to 9 and/or an apparatus (5) according to any one of the claims 10 to 13 for carrying out an advertising campaign.

## Revendications

1. Procédé pour la réalisation d'un tirage au sort avec un dispositif de tirage au sort en liaison avec un dispositif de traitement automatique de messages SMS, qui est effectué à nouveau à l'aide d'un dispositif serveur (1), qui peut échanger des informations avec un réseau de téléphonie mobile (3), le procédé présentant les étapes de procédé suivantes:
■ saisie électronique d'un message SMS envoyé par un dispositif de téléphonie mobile (2) via le réseau de téléphonie mobile (3) à l'aide du dispositif de serveur (1) ;
■ détermination automatique d'un contenu du message SMS ;
■ génération automatique d'un message de réponse SMS en fonction du contenu déterminé du message SMS, le message de réponse SMS comprenant un code alphanumérique pour l'entrée sur un dispositif de tirage au sort ; et
■ transmission du message de réponse SMS au dispositif de téléphonie mobile (2) et présentation du code alphanumérique sur un dispositif d'affichage (4) du système de téléphonie mobile (2) ;
■ saisie électronique d'une identification électronique, attribuée au dispositif de téléphonie mobile (2), à l'aide du dispositif serveur (1) ;
■ stockage d'une information via le message de réponse SMS dans le dispositif serveur (1), de sorte que l'information est attribuée par électronique à l'identification et
le procédé comprenant également les étapes de procédé suivantes :
■ saisie électronique d'une entrée utilisateur du code alphanumérique, inclus par le message de réponse SMS, à l'aide de moyens d'entrée (6) d'un dispositif de tirage au sort (5), qui peut être relié au dispositif serveur (1) pour l'échange électronique d'informations;
■ contrôle électronique du code alphanumérique, inclus par le message de réponse SMS, à l'aide de moyens de processeur du dispositif de tirage au sort (5), des informations étant échangées entre le dispositif de tirage au sort (5) et le dispositif serveur (1) lors du contrôle électronique du code alphanumérique, inclus par le message de réponse SMS, à l'aide d'un dispositif de modem du dispositif de tirage au sort (5) ; et
■ amorçage automatique d'un tirage au sort en fonction du résultat du contrôle électronique du code alphanumérique, inclus par le message de réponse SMS.

2. Procédé selon la revendication 1, **caractérisé en ce que** un numéro de téléphonie mobile du dispositif de téléphonie mobile (2) est saisi lors de la saisie électronique de l'identification, qui est attribuée au dispositif de téléphonie mobile (2).

3. Procédé selon la revendication 1 ou 2, **caractérisé en ce qu'**un message de télécopie est généré automatiquement dans le dispositif serveur (1) et transmis automatiquement à un dispositif de télécopie (8), le message de télécopie comprenant le code alphanumérique, inclus par le message de réponse SMS, et l'identification saisie par électronique du dispositif de téléphonie mobile (2).

4. Procédé selon la revendication 1, **caractérisé en ce que** l'entrée de l'utilisateur est saisie de façon électronique à l'aide d'un dispositif de clavier (6) du dispositif de tirage au sort (1) .

5. Procédé selon l'une quelconque des revendications précédentes, **caractérisé en ce que** le tirage au sort est activé automatiquement uniquement dans les cas où, lors du contrôle électronique du code alphanumérique, inclus par le message de réponse SMS, on constate que le code alphanumérique, inclus par le message de réponse SMS, permet une validation et n'a pas été validé à un moment antérieur pour un tirage au sort.

6. Procédé selon l'une quelconque des revendications précédentes, **caractérisé en ce que** le tirage au sort est effectué à l'aide de moyens de processeur du dispositif serveur (1) et un résultat du tirage au sort est transmis par électronique du dispositif serveur (1) au dispositif de tirage au sort (5).

7. Procédé selon l'une quelconque des revendications 1 à 5, **caractérisé en ce que** le procédé de tirage au sort électronique est effectué à l'aide des moyens de processeur du dispositif de tirage au sort (5).

8. Procédé selon l'une quelconque des revendications précédentes, **caractérisé en ce que** le résultat du tirage au sort est affiché et/ou imprimé à l'aide de moyens d'édition (7) du dispositif de tirage au sort (5).

9. Procédé selon l'une quelconque des revendications précédentes, **caractérisé en ce que**, pendant le contrôle automatique du code alphanumérique, inclus par le message de réponse SMS, d'autres informations sont affichées automatiquement à l'aide un dispositif d'affichage du dispositif de tirage au sort (5).

10. Dispositif de tirage au sort (5) pour une utilisation dans un procédé de tirage au sort selon l'une quelconque des revendications 1 à 9, le dispositif de tirage au sort (5) présentant les caractéristiques suivantes:
■ moyen d'entrée (6) pour la saisie électronique d'une entrée utilisateur, qui comprend un code alphanumérique, transcrit par un dispositif serveur (1) ;
■ moyen de processeur pour l'exécution d'un échange d'informations avec le dispositif serveur (1) pour le contrôle de l'entrée utilisateur saisie de façon électronique ; et
■ un dispositif modem relié aux moyens de processeur pour l'émission/la réception de données dans le cadre de l'échange d'information avec le dispositif serveur (1).

11. Dispositif (5) selon la revendication 10, **caractérisé en ce que** le dispositif de modem est un modem ISDN ou un modem analogique ou un modem de téléphonie mobile.

12. Dispositif (5) selon la revendication 10 ou 11, **caractérisé par** des moyens pour l'exécution automatique du tirage au sort.

13. Dispositif (5) selon la revendication 13, **caractérisé par** des moyens d'édition (7) pour l'édition graphique et/ou l'impression d'un résultat du tirage au sort.

14. Utilisation d'un procédé selon l'une quelconque des revendications 1 à 9 et/ou d'un dispositif (5) selon l'une quelconque des revendications 10 à 13 pour la mise en oeuvre d'une action publicitaire.
